# EUROPÄISCHE PATENTSCHRIFT

(11) **EP 1 261 177 B1**
(45) Veröffentlichungstag und Bekanntmachung des Hinweises auf die Patenterteilung: **09.11.2005**
(21) Anmeldenummer: 02100380.1
(22) Anmeldetag: 16.04.2002
(51) Int. Cl.: H04L 12/56

(54) **Verfahren und Vorrichtung zum Einstellen der Bandbreite einer Verbindung zwischen mindestens zwei Kommunikationsendpunkten in einem Datennetz**
Method and apparatus for the setting of bandwidth of a connection between at least two communication endpoints in a data network
Méthode et procédé pour régler la bandepassante d'une connexion entre au minimum deux points finaux de communication dans un réseau de données

(30) Priorität: 09.05.2001 DE 10122422
(43) Veröffentlichungstag der Anmeldung: 27.11.2002
(73) Patentinhaber: SIEMENS AKTIENGESELLSCHAFT, 80333 München (DE)
(72) Erfinder: Abel, Ulrich, 45329 Essen (DE); Lindemann, Werner, Dr., 45473 Mülheim (DE); Schönfeld, Norbert, 44145 Dortmund (DE)

(56) Entgegenhaltungen:
- WO-A-00/13369
- WO-A-99/66689
- GB-A- 2 345 613
- US-B1- 6 202 094
- CHAME A: "Integrated processors in internetworking applications" AEROSPACE APPLICATIONS CONFERENCE, 1996. PROCEEDINGS., 1996 IEEE ASPEN, CO, USA 3-10 FEB. 1996, NEW YORK, NY, USA,IEEE, US, 3. Februar 1996 (1996-02-03), Seiten 391-401, XP010159013 ISBN: 0-7803-3196-6

## Beschreibung

Die Erfindung betrifft ein Verfahren zum Einstellen der Bandbreite einer Verbindung zwischen mindestens zwei Kommunikationsendpunkten in einem Datennetz nach dem Oberbegriff des Patentanspruchs 1 und eine Vorrichtung zur Durchführung des Verfahrens nach Patentanspruch 7.

Sprachverbindungen in Telekommunikationsnetzen werden bisher überwiegend verbindungsorientiert aufgebaut. Hierzu ist für eine Signalübertragung zwischen zwei Kommunikationsendpunkten ausschließlich eine Leitung vorgesehen, die sozusagen für diese Sprachverbindung reserviert ist. In der Literatur wird in diesem Zusammenhang häufig von einer leitungsvermittelten oder -orientierten Telekommunikation gesprochen.

Mit dem Aufkommen paketorientierter Datennetze, wie beispielsweise dem Internet, ist eine im Vergleich zur leitungsorientierten Telekommunikation preisgünstigere Telekommunikation möglich. Dies liegt insbesondere an einer besseren Ausnutzbarkeit von zur Verfügung stehenden Verbindungsressourcen, da die in einem Telekommunikationsnetz vorhandenen Ressourcen, insbesondere Übertragungskapazitäten mittels einer paketorientierten Übertragung weitaus effizienter genutzt werden können, als dies bei einer leitungsorientierten Übertragung mit zugesicherter Leitungskapazität möglich ist.

Als paketorientierte Übertragungsverfahren für Sprache sind beispielsweise VoF - kurz für 'Voice over Frame Relay' - oder VoIP - kurz für 'Voice over IP' - bekannt. Insbesondere der VoIP-Technologie wird eine wesentliche Bedeutung für die zukünftige Sprachkommunikation vorausgesagt.

Bei der Übertragung von Sprachdaten mittels paketorientierter Übertragungsverfahren tritt jedoch das Problem auf, daß in Abhängigkeit von der Auslastung eines Datennetzes die einer Sprachverbindung zur Verfügung stehende Übertragungsbandbreite schwankt. Üblicherweise führt dies zu Verzögerungen - in der Literatur häufig als 'Delay' bzw. 'Jitter' bezeichnet - oder gar Aussetzern bei der Sprachverbindung. Im schlimmsten Fall kann die Sprachverbindung sogar komplett abbrechen. Der sogenannte QoS - kurz für 'Quality of Service' - einer derartigen Sprachverbindung ist daher im Vergleich zu einer leitungsvermittelten Kommunikation deutlich geringer. Um diesen Problemen zumindest teilweise abzuhelfen, werden Sprachkompressionsverfahren, wie beispielsweise G.723.1, zur Verringerung der für die Sprachkommunikation benötigten Bandbreite eingesetzt.

Da bei der VoIP-Technologie häufig das für eine Sprachkommunikation aufgrund der bei den meisten Zugängen schwankenden Bandbreite weniger geeignete Internet als Datennetz genutzt wird, ist es besonders wichtig, eine Mindestbandbreite für eine als Minimum definierte Verbindungsqualität zu erhalten. Die zum Aufbau von Verbindungen eingesetzten Router steuern die Bandbreite entsprechend der aktuellen Bandbreitenanforderung einer Sprachverbindung. Konkret bedeutet dies, daß bei einer VoIP-Verbindung in Abhängigkeit der gerade erforderlichen Bandbreite mindestens ein neuer Übertragungskanal aufgebaut wird.

Beispielsweise ist aus der internationalen Offenlegungsschrift WO 00/13369 ein Verfahren bekannt, bei dem ein Zugangknoten aus allen eingehenden Datenpaketen solche mit einer Verkehrsinformation gesondert gekennzeichneten Datenpakete erkennt. Hierbei sind diejenigen Datenpakete mit einer Verkehrsinformation gesondert gekennzeichnet, die zu einem vom Teilnehmer angeforderten Dienst gehören, für den eine erhöhte Übertragungsbandbreite erforderlich ist. Gemäß der Verkehrsinformation veranlasst der Zugangsknoten die Bereitstellung mindestens eines zusätzlichen Übertragungskanals zum Zwecke einer Verbindung mit mindestens einem bereits bestehenden Übertragungskanal zu einer gemeinsamen Übertragungsstrecke zwischen dem Zugangknoten und mindestens einer solchen Teilnehmerendeinrichtung bzw. Nebenstellenanlage.

Des Weiteren ist aus der internationalen Offenlegungsschrift WO 99/66689 ein Verfahren zur Verbindung eines Terminals mit einem Datennetz bekannt, bei dem als Reaktion auf eine Initialisierungsanfrage dem Terminal ein erster Verbindungskanal zugeordnet wird. Auf Anfrage wird für das Terminal zusätzlich zum ersten Verbindungskanal ein weiterer Verbindungskanal allokiert.

Bei den beschriebenen Verfahren können jedoch Störungen in der Sprachverbindung auftreten, da erst bei einem auftretenden Bedarf zusätzliche Bandbreite angefordert wird und dadurch die Sprachverbindung größeren Aussetzern und/oder Verzögerungen unterliegt. Der Router trifft seine Entscheidung zur Anforderung zusätzlicher Bandbreite auf Basis der gerouteten Daten, also erst zu einem Zeitpunkt, zu dem bereits zusätzliche Bandbreite erforderlich ist. Eine völlig ungestörte Sprachverbindung ist daher auch mit dieser Methode nicht möglich.

Zur besseren Veranschaulichung wird im folgenden auf Fig. 4 Bezug genommen. Die Figur zeigt eine Anordnung mit einem Router zum Aufbauen von Verbindungen zwischen Kommunikationsendpunkten. Zwischen einem Router 50 als ein erster Kommunikationsendpunkt und einer Gegenstelle 56 als zweiter Kommunikationsendpunkt sind zwei Übertragungskanäle 52 und 54 aufgebaut. Die Gegenstelle ist eine PPP-Schnittstelle (Point to Point Protocol), welche die Nutzung des Internet-Protokolls TCP/IP über ein Fernmeldenetz ermöglicht. Eine Steuereinheit 58 umfaßt eine Meßeinheit 60 und eine Schwellwertsteuereinheit 62. Die Meßeinheit 60 mißt den Datendurchsatz über die beiden Übertragungskanäle 52 und 54.

Bei einer Verbindungsanforderung ermittelt die Steuereinheit 58 über die Meßeinheit 60 den Datendurchsatz und baut gegebenenfalls durch die Schwellwertsteuereinheit 62 zusätzliche Datenkanäle für die angeforderte Verbindung auf. Benötigt eine bereits bestehende Verbindung zusätzliche Bandbreite und fordert diese an, so werden ebenfalls zusätzliche Datenkanäle aufgebaut, wodurch allerdings die Sprachqualität während des Aufbaus der zusätzlichen Datenkanäle gering ist. Unter Umständen kann der Aufbau auch so spät erfolgen, daß die Sprachverbindung für eine gewisse Zeitspanne unterbrochen ist bzw. Sprachdaten aufgrund mangelnder Bandbreite verloren gehen.

Als Lösung dieser Probleme wurden auf der Protokollebene neue Verfahren vorgeschlagen. Eines davon ist ein als RSVP - kurz für 'Resource Reservation Setup Protocol' - bezeichnetes Endto-End-Internet-Protokoll der IETF (Internet Engineering Task Force) und der Firma Cisco. Um einen bestimmten QoS für Anwendungen über das Internet zu erhalten, werden Netzressourcen, wie beispielsweise Bandbreite, für eine Übertragung reserviert. RSVP reserviert nicht nur vor einer Übertragung von Daten Ressourcen, sondern paßt auch dynamisch Übertragungskapazitäten an. Allerdings ist RSVP ein proprietäres Protokoll, das von allen an einer Übertragung beteiligten Komponenten beherrscht werden muß. Zudem ist das PSVP-Protokoll sehr aufwendig, weshalb es bisher wenig verbreitet ist. Zudem ist der technische Aufwand zur Implementierung des RSVP-Protokolls beträchtlich.

Der Erfindung liegt daher die Aufgabe zugrunde, ein Verfahren zum Einstellen der Bandbreite einer Verbindung zwischen mindestens zwei Kommunikationsendpunkten in einem Datennetz und eine Vorrichtung zur Durchführung des Verfahrens bereitzustellen, die eine für Sprachverbindungen ausreichende Bandbreite bereits vor einer Übertragung gewährleisten und in herkömmlichen Telekommunikationsnetzen ohne zusätzlichen Protokollaufwand einsetzbar sind.

Diese Aufgabe wird durch ein Verfahren mit den Merkmalen des Patentanspruchs 1 und durch eine Vorrichtung mit den Merkmalen des Patentanspruchs 7 gelöst.

Bevorzugte Ausgestaltungen der Erfindung ergeben sich aus den abhängigen Ansprüchen.

Der der Erfindung zugrunde liegende Gedanke besteht in einer Überwachung der Signalisierungsverbindung einer Verbindung, insbesondere einer Sprachverbindung, auf Anforderungen für Kommunikationsverbindungen und einer davon abhängigen Steuerung eines Aufbaus von freien Übertragungskanälen für die angeforderten Kommunikationsverbindungen. Damit ist für eine bereits bestehende Kommunikationsverbindung, insbesondere Sprachverbindung, gewährleistet, daß die für die Übertragung zur Verfügung stehende Bandbreite nicht durch zusätzliche Kommunikationsverbindungen verringert wird. Ein Verbindungsaufbau für Kommunikationsverbindungen erfolgt somit nur bei ausreichender Bandbreite in Form von zusätzlichen freien Übertragungskanälen.

Unter einer Kommunikationsverbindung wird ganz allgemein eine Verbindung zum Austauschen von Daten zwischen Kommunikationsendpunkten verstanden. Im besonderen ist die Kommunikationsverbindung eine Sprachverbindung. Da bisher insbesondere in der paketorientierten Sprachübertragung die Anzahl der Sprachverbindungen im wesentlichen unabhängig von der verfügbaren Bandbreite ist, wird bei einer großen Anzahl von Sprachverbindungen die Qualität jeder einzelnen Sprachverbindung geringer. Ein derartiger Zustand tritt bei der vorliegenden Erfindung nicht mehr auf. Vielmehr wird die für eine Sprachverbindung benötigte Bandbreite garantiert. Ferner wird im Gegensatz zum RSVP-Protokoll kein zusätzliches und eigenständiges Protokoll zum Verbindungsaufbau benötigt. Hierdurch wird der Aufwand zur Implementierung und der Bedarf an Ressourcen, insbesondere an Speicherkapazität sowie Prozessor-Performance, wesentlich verringert.

Das Einstellen der Bandbreite einer Verbindung zwischen mindestens zwei Kommunikationsendpunkten in einem Datennetz erfolgt durch eine Überwachungs- und eine Steuereinheit. Im Datennetz wird der Verbindung mindestens ein Übertragungskanal zur Datenübertragung zugewiesen. Die Verbindung selbst umfaßt eine Signalisierungs- und Nutzkanalverbindung. Über die Nutzkanalverbindung werden paketorientiert Nutzdaten zwischen den Kommunikationsendpunkten übertragen. Die Nutzdaten sind hierbei mindestens einer Kommunikationsverbindung, insbesondere eine Sprachverbindung, zugeordnet. Die Überwachungseinheit überwacht die Signalisierungsverbindung auf Anforderungen mindestens einer weiteren Kommunikationsverbindung. Bei einer Anforderung signalisiert sie der Steuereinheit, der Verbindung einen oder mehrere zusätzliche freie Übertragungskanäle für die mindestens eine angeforderte Kommunikationsverbindung zuzuweisen.

Erfindungsgemäß wird bei einer signalisierten Anforderung geprüft, ob die Bandbreite für die angeforderte Kommunikationsverbindung, insbesondere Sprachverbindung, ausreichend ist.

Anschließend wird ermittelt, ob für den Bandbreitenbedarf der angeforderten Kommunikationsverbindung entsprechend viele Übertragungskanäle frei sind. In Fällen, in denen nicht genügend Übertragungskanäle vorhanden sind, wird die Verbindungsanforderung in einer Warteschlange gespeichert. Zu einem späteren Zeitpunkt werden freie Übertragungskanäle aufgebaut und die gespeicherte Verbindungsanforderung wird abgearbeitet. Das erfindungsgemäße Verfahren läßt sich kostengünstig in bereits bestehende Systeme implementieren, beispielsweise als Programm in einem Festwertspeicher, wie beispielsweise einem ROM. Ein Telekommunikationsprozessor kann dieses Programm dann ausführen.

Bei einer Belegung aller zur Verfügung stehenden Übertragungskanäle kann eine signalisierte Anforderung auch zurückgewiesen werden. In diesem Fall ist es nicht erforderlich, Verbindungsanforderungen lange zu speichern. Dies spart einerseits Speicherplatz und verringert andererseits den Aufwand zum Verwalten der gespeicherten Verbindungsanforderungen.

In einer besonders bevorzugten Ausführungsform werden die Nutzdaten gemäß dem Voice-over-Internet-Protokoll - kurz VoIP - übertragen. Mit anderen Worten wird das erfindungsgemäße Verfahren derzeit bevorzugt in einem WAN - kurz für 'Wide A-rea Network' - mit paketorientierten Übertragungsverfahren wie VoIP eingesetzt.

Eine Kommunikationsverbindung wird vorzugsweise durch eine TCP-Portnummer charakterisiert. TCP-Portnummern sind software-mäßig relativ einfach realisierbar und stehen beispielsweise bei Internet-Browsern in ausreichender Zahl zur Verfügung. Eine Implementierung des erfindungsgemäßen Verfahrens in bestehende Browser wäre daher beispielsweise als Plug-In prinzipiell möglich. Vorzugsweise wird eine Anforderung einer Kommunikationsverbindung durch eine Meldung einer TCP-Portnummer signalisiert.

Die Kommunikationsendpunkte können beispielsweise Telekommunikationsanlagen, ISDN-Terminals und/oder Personal-Computer mit Datennetzanschlüssen sein.

Das Datennetz ist vorzugsweise das ISDN (Integrated Services Digital Network), das zumindest in Europa und dort sowohl im Unternehmens- als auch Privatbereich weit verbreitet ist.

Vorzugsweise erfolgt die paketorientierte Übertragung von Nutzdaten mittels dem TCP/IP-Protokoll. Das TCP/IP-Protokoll ist als das Internet-Protokoll bekannt und in WANs weit verbreitet, wird aber auch zunehmend in kleineren Netzwerken wie LANs (Local Area Networks) eingesetzt. Ein weiterer Vorteil liegt darin, daß viele private Personal-Computer heutzutage einen Internet-Anschluß besitzen und das TCP/IP-Protokoll zur Übertragung von Daten über das Internet verwenden. Diese Rechner sind damit prinzipiell für das erfindungsgemäße Verfahren geeignet.

Eine Vorrichtung zur Durchführung des erfindungsgemäßen Verfahrens umfaßt einen Router mit einer Überwachungs- und einer Steuereinheit. Die Überwachungseinheit ist über eine Signalleitung mit der Steuereinheit verbunden, um dieser eine Sprachverbindungsanforderung signalisieren zu können.

Der Router kann eine Messeinheit zum Messen des Datendurchsatzes der Übertragungskanäle einer Datenverbindung aufweisen. Die ermittelten Messergebnisse können beispielsweise bei der Ermittlung der noch zur Verfügung stehenden Bandbreite vorteilhaft herangezogen werden.

Der Router ist vorzugsweise Bestandteil einer Telekommunikationsanlage. Diese kann einen LAN-Anschluß zum Verbinden mit Personal-Computern, IP-Telefonen mit LAN-Anschluß und/oder weiteren Telekommunikationsanlagen über ein LAN aufweisen. Mit den Personal-Computern und/oder IP-Telefonen ist somit der Aufbau von Sprachverbindungen über die Telekommunikationsanlage möglich, die hierzu mit einem paketorientierten Datennetz für Sprachverbindungen über ein WAN gekoppelt sein können.

Vorzugsweise ist die Telekommunikationsanlage eine ISDN-Telekommunikationsanlage mit Basis- oder Primärratenanschluß.

Die Erfindung wird nachfolgend anhand von Ausführungsbeispielen in Verbindung mit den Zeichnungen erläutert.

Dabei zeigen:
- Fig. 1:: ein Ausführungsbeispiel einer Anordnung zum Verbinden zweier Kommunikationsendpunkte gemäß der Erfindung, wobei die Bandbreite der Verbindung zwischen den zwei Kommunikationsendpunkten mittels eines Routers einstellbar ist,
- Fig. 2:: ein Ablaufschema der Verarbeitung einer Verbindungsanforderung,
- Fig. 3:: ein Ausführungsbeispiel einer Vernetzung zweier LANs, in und zwischen denen Sprachdaten mittels dem VoIP-Protokoll übertragen werden, und
- Fig. 4:: ein Ausführungsbeispiel einer Anordnung zum Verbinden zweier Kommunikationsendpunkte mit einem Router zum Verbindungsaufbau gemäß dem Stand der Technik.

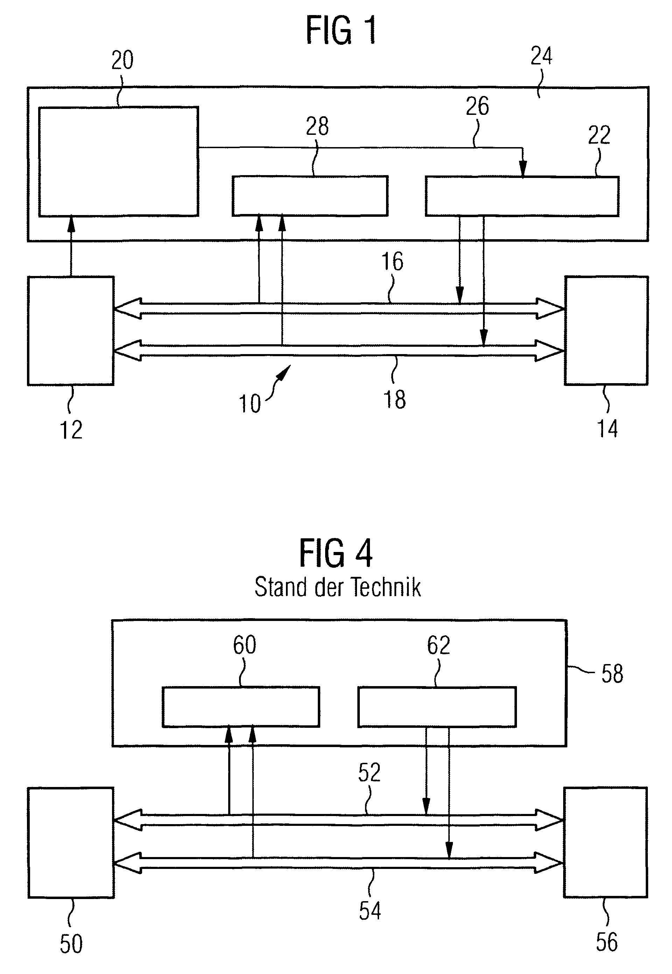

In Fig. 1 ist eine Datenverbindung 10 zwischen einem Router 12 als ersten Kommunikationsendpunkt und einer PPP-Schnittstelle 14 als zweiten Kommunikationsendpunkt dargestellt. Die Datenverbindung 10 umfasst zwei Übertragungskanäle 16 und 18, deren Datendurchsatz von einer Messeinheit 28 gemessen wird.

Die Messeinheit 28 ist Teil einer Überwachungs- und Steuereinheit 24. Die Überwachungs- und Steuereinheit 24 ist mit dem Router 12 gekoppelt. Vorzugsweise ist sie Bestandteil des Routers 12.

Die Überwachungs- und Steuereinheit 24 weist eine Daten vom Router 12 empfangende Überwachungseinheit 20 und eine Steuereinheit 22 auf. Die Steuereinheit 22 ist über eine Signalleitung 26 mit der Überwachungseinheit 20 verbunden. Die Steuereinheit 22 steuert den Auf- und Abbau von verbindungsspezifischen Übertragungskanälen.

Die Verbindung 10 umfasst im vorliegenden Ausführungsbeispiel eine Signalisierungsverbindung und eine Nutzkanalverbindung. Über die Nutzkanalverbindung - die auch als Userplane oder Payloadstream bezeichnet wird - können Sprachdaten übertragen werden. Die Signalisierungsverbindung - die auch als Controlplane oder Signalingstream bezeichnet wird - dient einer Steuerung von Sprachverbindungen. Mittels der Überwachungseinheit 20 wird die Signalisierungsverbindung durch den Router 12 überwacht.

Sprachverbindungen sind im Router 12 mittels sogenannter TCP-Portnummern realisiert. Anforderungen für Sprachverbindungen werden als Meldungen mit den entsprechenden TCP-Portnummern signalisiert. Die Überwachungseinheit 20 detektiert Meldungen mit TCP-Portnummern, die vom Router 12 an die Überwachungseinheit 20 weitergegeben werden. Die Überwachungseinheit 20 steuert über die Signalleitung 26 die Steuereinheit 22, welche freie Übertragungskanäle für eine angeforderte Sprachverbindung aufbaut. Ein Aufbau von freien Übertragungskanälen wird nur vorgenommen, wenn für die angeforderte Sprachverbindung noch genügend Bandbreite der Verbindung 10 zur Verfügung steht. Dies wird mittels der Messeinheit 28 überprüft, die den Datendurchsatz der Verbindung 10 mißt. Die Überwachungseinheit 20 kann von der Messeinheit 28 den aktuellen Datendurchsatz über die Verbindung 10 abfragen und daraus die zur Verfügung stehende Bandbreite ermitteln. Davon abhängig steuert die Überwachungseinheit 20 über die Signalleitung 26 die Steuereinheit 22 an, die freie Übertragungskanäle für die angeforderte Sprachverbindung aufbaut.

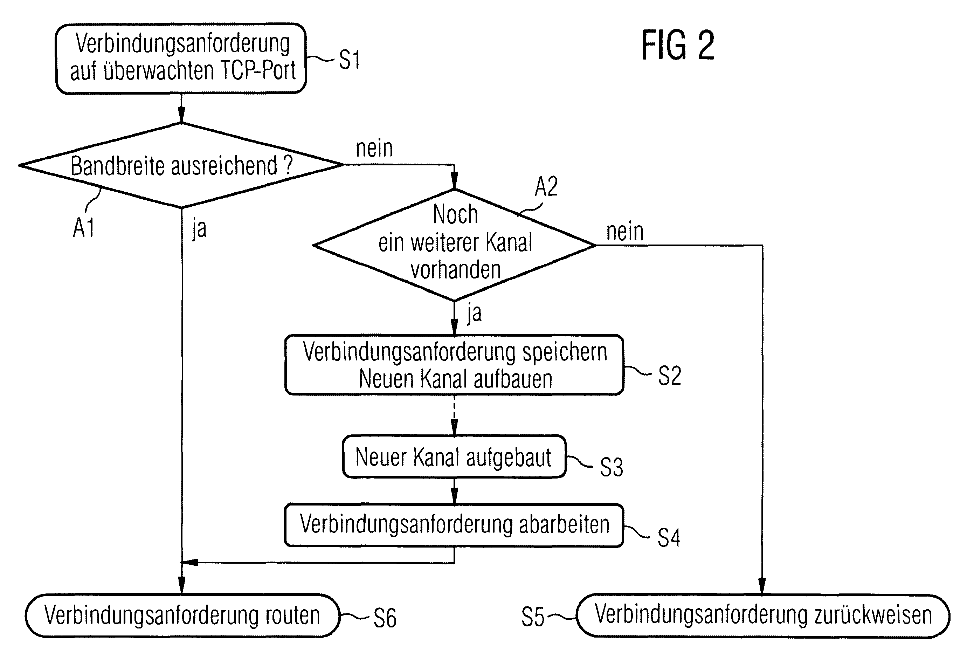

Die wesentlichen Verfahrensschritte beim Verarbeiten einer Verbindungsanforderung sind in Fig. 2 schematisch dargestellt. In einem ersten Schritt S1 signalisiert ein überwachter TCP-Port eine Verbindungsanforderung für eine Sprachverbindung. Die Überwachungseinheit 20 ermittelt sodann die zur Verfügung stehende, d.h. noch freie Bandbreite einer Verbindung und prüft in einem ersten Abfrage-Schritt A1, ob die freie Bandbreite für die angeforderte Sprachverbindung ausreichend ist. Reicht die freie Bandbreite für die angeforderte Sprachverbindung aus, so wird in Schritt S6 verzweigt, und die Verbindungsanforderung wird über den Router 12 geroutet.

Andernfalls, also bei nicht ausreichender Bandbreite, wird in einen weiteren Abfrage-Schritt A2 verzweigt. In diesem Abfrage-Schritt wird überprüft, ob die Verbindung noch freie Übertragungskanäle für die angeforderte Sprachverbindung aufweist. Ist dies nicht der Fall, so wird in einen Schritt S5 verzweigt, in dem die Verbindungsanforderung zurückgewiesen wird. In diesem Fall ist es mangels Ressourcen nicht möglich, eine weitere Sprachverbindung über die Verbindung aufzubauen.

Andernfalls, bei noch freien Übertragungskanälen der Verbindung, wird in einen Schritt S2 verzweigt, in dem die Verbindungsanforderung solange gespeichert wird, bis ein neuer Übertragungskanal in einem Schritt S3 aufgebaut ist. Sodann wird in einem Schritt S4 die Verbindungsanforderung abgearbeitet, und es wird in den Schritt S6 verzweigt, in dem die Verbindungsanforderung vom Router 12 geroutet wird.

Der Verbindungsaufbau wird also erst fortgesetzt, wenn eine ausreichende Bandbreite in Form von freien Übertragungskanälen zur Verfügung steht. Damit ist eine temporäre Qualitätseinbuße auch bei bestehenden Sprachverbindungen ausgeschlossen. Zudem ist kein eigenes - unter Umständen komplexes - Protokoll wie das RSVP-Protokoll erforderlich.

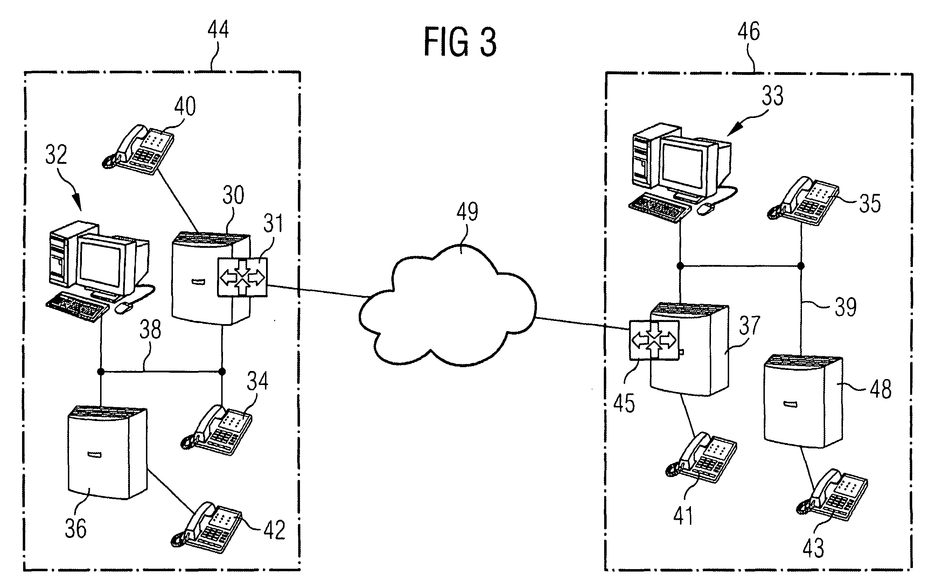

In Fig. 3 ist der Einsatz des erfindungsgemäßen Verfahrens zur Sprachkommunikation zwischen einer Zentrale 44 und einer Filiale 46 eines Unternehmens schematisch dargestellt.

In der Zentrale 44 ist eine ISDN-Telekommunikationsanlage 30 zum Verbinden mit einem ISDN-Kommunikationsnetz 49 vorgesehen. Mit der ISDN-Telekommunikationsanlage 30 sind einerseits ISDN-Telefone 40 verbindbar. Andererseits weist die ISDN-Telekommunikationsanlage 30 einen Anschluß für ein LAN 38 auf. Über dieses LAN 38 können Personal-Computer 32 mit LAN-Anschluss, IP-Telefone 34 mit LAN-Anschluss und weitere Telekommunikationsanlagen 36 mit einem LAN-Anschluss kommunizieren.

Sprachverbindungen erfolgen über das LAN 38 mittels des VoIP-Protokolls. Konkret bedeutet dies, dass die über das LAN 38 miteinander verbundenen Kommunikationsendpunkte, wie Personal-Computer 32, IP-Telefone 34 und Telekommunikationsanlagen 30, 36 zur Abwicklung von Sprachverbindungen, TCP-IP als Übertragungsprotokoll unterstützen müssen.

Die Filiale 46 ist ähnlich der Zentrale 44 aufgebaut. Die Filiale 46 enthält also auch eine ISDN-Telekommunikationsanlage 37, die mit dem ISDN-Telekommunikationsnetz 49 verbunden ist. Die zentrale ISDN-Telekommunikationsanlage 37 ist mit einem LAN 39 in der Filiale 46 verbunden. An das LAN 39 sind Personal-Computer 33 mit LAN-Anschluss, IP-Telefone 35 mit LAN-Anschluss und Telekommunikationsanlagen 48 mit LAN-Anschluss angeschlossen.

Ebenso wie in der Zentrale 44 ist in dem LAN 39 der Filiale 46 das TCP/IP-Protokoll für eine Datenübermittlung vorgesehen. An die in der Filiale 46 vorhandenen Telekommunikationsanlagen 37, 48 können auch weitere (ISDN-)Telefone 41, 43 angeschlossen werden.

Die ISDN-Telekommunikationsanlagen 30 und 37 der Zentrale 44 bzw. der Filiale 46 besitzen jeweils einen Primärratenanschluss 31 bzw. 45 zum Anschluß an das ISDN-Telekommunikationsnetz 49. Des weiteren sind die Telekommunikationsanlagen 30 und 37 über das - nicht dargestellte - Internet miteinander verbunden. Die beiden ISDN-Telekommunikationsanlagen 30 und 37 sind des weiteren mit - nicht dargestellten - Routern zum Routen von VoIP-Sprachverbindungen über das Internet und die LANs 38, 39 ausgestattet.

Die Router überwachen Signalisierungsverbindungen und insbesondere die darüber signalisierten Anforderungen von Sprachverbindungen. Einerseits steuern die Router Sprachverbindungen über die LANs 38 und 39 intern in der Zentrale 44 bzw. der Filiale 46, andererseits steuern die Router Sprachverbindungen über das Internet zwischen Zentrale 44 und Filiale 46. Hierzu überwachen die Router die Signalisierungsverbindung einer Verbindung in den LANs 38 und 39 sowie zwischen der Zentrale 44 und der Filiale 46 über das Internet. Über die Signalisierungsverbindung signalisierte Anforderungen von Sprachverbindungen steuern die Router sowohl innerhalb der Zentrale 44 und Filiale 46 als auch über das Internet, indem sie - wie in Fig. 2 dargestellt - die zur Verfügung stehende Bandbreite einer Verbindung ermitteln und davon abhängig gegebenenfalls zusätzliche Übertragungskanäle für die angeforderten Sprachverbindungen aufbauen. Bei Überlastung, also bei nicht ausreichend zur Verfügung stehender Bandbreite, werden Sprachverbindungsanforderungen von den Routern zurückgewiesen. Dies kann beispielsweise dadurch geschehen, dass ein Besetzt-Zeichen in einem eine Sprachverbindung anfordernden Kommunikationsendgerät signalisiert wird.

Durch den Einsatz der Router in den ISDN-Telekommunikationsanlagen 30 und 37 wird somit eine Sprachkommunikation über die LANs 38 und 39 sowie zwischen der Zentrale 44 und Filiale 46 im wesentlichen ohne Qualitätseinbußen durch die Zuweisung ausreichender Bandbreite zu einzelnen Sprachverbindungen und unter Vermeidung aufwendiger Protokolle wie RSVP ermöglicht.

## Patentansprüche

1. Verfahren zum Einstellen der Bandbreite einer Verbindung (10) zwischen mindestens zwei Kommunikationsendpunkten (12, 14) in einem Datennetz, in dem
- der Verbindung (10) mindestens ein Übertragungskanal (16, 18) zur Datenübertragung zugewiesen wird,
- die Verbindung (10) eine Signalisierungs- und Nutzkanalverbindung umfaßt, wobei über die Nutzkanalverbindung paketorientiert Nutzdaten zwischen den Kommunikationsendpunkten (12, 14) übertragen werden und
- die Nutzdaten mindestens einer Kommunikationsverbindung, insbesondere Sprachverbindung, zugeordnet sind,
- eine Überwachungseinheit (20) die Signalisierungsverbindung auf Anforderungen mindestens einer weiteren Kommunikationsverbindung überwacht und bei einer Anforderung einer Steuereinheit (22) signalisiert, der Verbindung (10) einen oder mehrere zusätzliche freie Übertragungskanäle für die mindestens eine angeforderte Kommunikationsverbindung zuzuweisen,
**dadurch gekennzeichnet,daß**
bei einer signalisierten Anforderung (S1)
- geprüft wird, ob die Bandbreite für die angeforderte Kommunikationsverbindung ausreicht (A1),
- **falls dies nicht der Fall ist,** ermittelt wird, ob für den Bandbreitenbedarf der angeforderten Kommunikationsverbindung entsprechend viele Übertragungskanäle (18) frei sind (A2),
- die Verbindungsanforderung in einer Warteschlange gespeichert wird (S2),
- freie Übertragungskanäle (18) aufgebaut (S3) werden,
- die gespeicherte Verbindungsanforderung abgearbeitet wird (S4) und
- die aufgebauten Übertragungskanäle (18) der Nutzkanalverbindung zugewiesen werden (S6).

2. Verfahren nach Anspruch 1,
**dadurch gekennzeichnet, daß**
bei einer Belegung aller zur Verfügung stehenden Übertragungskanäle (16, 18) eine signalisierte Anforderung zurückgewiesen wird (S5).

3. Verfahren nach einem der vorhergehenden Ansprüche,
**dadurch gekennzeichnet, daß**
die Nutzdaten gemäß dem Voice-over-Internet-Protokoll übertragen werden.

4. Verfahren nach einem der vorhergehenden Ansprüche,
**dadurch gekennzeichnet, daß**
eine Kommunikationsverbindung durch eine TCP-Portnummer charakterisiert wird.

5. Verfahren nach Anspruch 4,
**dadurch gekennzeichnet, daß**
eine Anforderung einer Kommunikationsverbindung durch eine Meldung einer TCP-Portnummer signalisiert wird.

6. Verfahren nach einem der vorangehenden Ansprüche,
**dadurch gekennzeichnet, daß**
die paketorientierte Übertragung von Nutzdaten mittels TCP/IP erfolgt.

7. Vorrichtung zum Einstellen der Bandbreite einer Verbindung (10) zwischen mindestens zwei Kommunikationsendpunkten (12, 14) in einem Datennetz, wobei
- der Verbindung (10) mindestens ein Übertragungskanal (16, 18) zur Datenübertragung zugewiesen ist,
- die Verbindung (10) eine Signalisierungs- und Nutzkanalverbindung umfaßt, wobei über die Nutzkanalverbindung paketorientiert Nutzdaten zwischen den Kommunikationsendpunkten (12, 14) übertragen werden, und
- die Nutzdaten mindestens einer Kommunikationsverbindung, insbesondere Sprachverbindung, zugeordnet sind,
mit einem Router (24) der eine Überwachungs- und einer Steuereinheit (20, 22) umfasst, wobei
- die Überwachungseinheit (20) über eine Signalleitung (26) mit der Steuereinheit (22) verbunden ist,
- die Überwachungseinheit (20) die Signalisierungsverbindung auf Anforderungen mindestens einer weiteren Kommunikationsverbindung überwacht und bei einer Anforderung einer Steuereinheit (22) signalisiert, der Verbindung (10) einen oder mehrere zusätzliche freie Übertragungskanäle für die mindestens eine angeforderte Kommunikationsverbindung zuzuweisen, bei einer signalisierten Anforderung (S1)
- geprüft wird, ob die Bandbreite für die angeforderte Kommunikationsverbindung ausreicht (A1),
- falls dies nicht der Fall ist, ermittelt wird, ob für den Bandbreitenbedarf der angeforderten Kommunikationsverbindung entsprechend viele Übertragungskanäle (18) frei sind (A2),
- die Verbindungsanforderung in einer Warteschlange gespeichert wird (S2),
- freie Übertragungskanäle (18) aufgebaut (S3) werden,
- die gespeicherte Verbindungsanforderung abgearbeitet wird (S4) und
- die aufgebauten Übertragungskanäle (18) der Nutzkanalverbindung zugewiesen werden (S6).

8. Vorrichtung nach Anspruch 7,
**dadurch gekennzeichnet, daß**
der Router (24) eine Messeinheit (28) zum Messen des Datendurchsatzes der Übertragungskanäle (16, 18) einer Verbindung (10) aufweist.

9. Vorrichtung nach Anspruch 7 oder 8,
**dadurch gekennzeichnet, daß**
die Kommunikationsendpunkte (12, 14) Telekommunikationsanlagen, ISDN-Terminals und/oder Personal-Computer mit Datennetzanschlüssen sind.

10. Vorrichtung nach einem der Ansprüche 7 - 9,
**dadurch gekennzeichnet, daß**
der Router (24) Bestandteil einer Telekommunikationsanlage (30) ist.

11. Vorrichtung nach Anspruch 10,
**dadurch gekennzeichnet,daß**
die Telekommunikationsanlage (30) einen LAN-Anschluß zum Verbinden mit Personal-Computern (32), IP-Telefonen mit LAN-Anschluß (34) und/oder weiteren Telekommunikationsanlagen (36) über ein LAN (38) aufweist.

12. Vorrichtung nach Anspruch 10 oder 11,
**dadurch gekennzeichnet,daß**
die Telekommunikationsanlage eine ISDN-Telekommunikationsanlage (30) mit Basis- oder Primärratenanschluß (31) ist.

## Claims

1. Method for adjusting the bandwidth of a connection (10) between at least two communication endpoints (12, 14) in a data network, in which:
- the connection (10) is assigned at least one transmission channel (16, 18) for data transmission,
- the connection (10) comprises a signalling and user channel connection, with user data being transmitted in packet-oriented form via the user channel connection between the communication endpoints (12, 14), and
- the user data is allocated to at least one communication connection, in particular a voice connection,
- a monitoring unit (20) monitors the signalling connection for requests for at least one further communication connection and, in the event of a request, signals to a control unit (22) to assign to the connection (10) one or more additional free transmission channels for the at least one requested communication connection,
**characterized in that** when a request (S1) is signalled,
- a check is carried out to determine whether the bandwidth is sufficient for the requested communication connection (A1),
- if this is not the case, a determination is made as to whether an appropriately large number of transmission channels (18) are free for the bandwidth requirements for the requested communication connection (A2),
- the connection request is stored in a queue (S2),
- free transmission channels (18) are set up (S3),
- the stored connection request is processed (S4), and
- the set-up transmission channels (18) are assigned to the user channel connection (S6).

2. Method according to Claim 1,
**characterized in that**,
if all the available transmission channels (16, 18) are busy, a signalled request is rejected (S5).

3. Method according to one of the preceding claims,
**characterized in that**
the user data is transmitted using the Voice-over-Internet protocol.

4. Method according to one of the preceding claims,
**characterized in that**
a communication connection is **characterized by** a TCP port number.

5. Method according to Claim 4,
**characterized in that**
a request for a communication connection is signalled by means of a message to a TCP port number.

6. Method according to one of the preceding claims,
**characterized in that**
the packet-oriented transmission of user data is carried out by means of TCP/IP.

7. Apparatus for adjusting the bandwidth of a connection (10) between at least two communication endpoints (12, 14) in a data network, wherein:
- the connection (10) is assigned at least one transmission channel (16, 18) for data transmission,
- the connection (10) comprises a signalling and user channel connection, with user data being transmitted in packet-oriented form via the user channel connection between the communication endpoints (12, 14), and
- the user data is allocated to at least one communication connection, in particular a voice connection, having a router (24) which comprises a monitoring unit (20) and a control unit (22), wherein the monitoring unit (20) is connected to the control unit (22) via a signal line (26),
- the monitoring unit (20) monitors the signalling connection for requests for at least one further communication connection and, in the event of a request, signals to a control unit (22) to assign to the connection (10) one or more additional free transmission channels for the at least one requested communication connection,
when a request (S1) is signalled,
- a check is carried out to determine whether the bandwidth is sufficient for the requested communication connection (A1),
- if this is not the case, a determination is made as to whether an appropriately large number of transmission channels (18) are free for the bandwidth requirements for the requested communication connection (A2),
- the connection request is stored in a queue (S2),
- free transmission channels (18) are set up (S3),
- the stored connection request is processed (S4), and
- the set-up transmission channels (18) are assigned to the user channel connection (S6).

8. Apparatus according to Claim 7,
**characterized in that**
the router (24) has a measurement unit (28) for measuring the data throughput rate of the transmission channels (16, 18) of a connection (10).

9. Apparatus according to Claim 7 or 8,
**characterized in that**
the communication endpoints (12, 14) are telecommunication systems, ISDN terminals and/or personal computers with data network connections.

10. Apparatus according to one of claims 7-9,
**characterized in that**
the router (24) is a component of a telecommunication system (30).

11. Apparatus according to Claim 10,
**characterized in that**
the telecommunication system (30) has a LAN connection for connection to personal computers (32), IP telephones with a LAN connection (34), and/or further telecommunication systems (36) via a LAN (38).

12. Apparatus according to Claim 10 or 11,
**characterized in that**
the telecommunication system is an ISDN telecommunication system (30) with a base rate or primary rate connection (31).

## Revendications

1. Procédé pour régler la bande passante d'une connexion (10) entre au moins deux points terminaux de communication (12, 14) dans un réseau de données, dans lequel
- au moins un canal de transmission (16, 18) est affecté à la connexion (10) pour la transmission de données,
- la connexion (10) comprend une connexion de signalisation et une connexion de canal utile, des données utiles orientées paquets étant transmises entre les points terminaux de communication (12, 14) par l'intermédiaire de la connexion de canal utile et
- les données utiles étant affectées à au moins une connexion de communication, notamment une connexion vocale,
- une unité de contrôle (20) contrôle la connexion de signalisation sur demandes d'au moins une autre connexion de communication et, lors d'une demande d'une unité de commande (22), signale d'affecter à la connexion (10) un ou plusieurs canaux de transmission libres supplémentaires pour l'au moins une connexion de communication demandée,
**caractérisé en ce que**
lors d'une demande signalée (S1)
- il est vérifié si la bande passante suffit pour la connexion de communication demandée (A1),
- si ce n'est pas le cas, il est déterminé si, pour le besoin en bande passante de la connexion de communication demandée, un nombre correspondant de canaux de transmission (18) sont libres (A2),
- la demande de connexion est mémorisée dans une file d'attente (S2),
- des canaux de transmission (18) libres sont établis (S3),
- la demande de connexion mémorisée est traitée (S4) et
- les canaux de transmission établis (18) sont affectés à la connexion de canal utile (S6).

2. Procédé selon la revendication 1,
**caractérisé en ce qu'**
en cas d'une occupation de tous les canaux de transmission (16, 18) disponibles, une demande signalée est rejetée (S5).

3. Procédé selon l'une quelconque des revendications précédentes,
**caractérisé en ce que**
les données utiles sont transmises selon le protocole Voice-over-Internet.

4. Procédé selon l'une quelconque des revendications précédentes,
**caractérisé en ce qu'**
une connexion de communication est **caractérisée par** un numéro de port TCP.

5. Procédé selon la revendication 4,
**caractérisé en ce qu'**
une demande d'une connexion de communication est signalée par un message d'un numéro de port TCP.

6. Procédé selon l'une quelconque des revendications précédentes,
**caractérisé en ce que**
la transmission de données utiles, orientée paquets, est réalisée au moyen de TCP/IP.

7. Dispositif pour régler la bande passante d'une connexion (10) entre au moins deux points terminaux de communication (12, 14) dans un réseau de données,
- au moins un canal de transmission (16, 18) étant affecté à la connexion (10) pour la transmission de données,
- la connexion (10) comprenant une connexion de signalisation et une connexion de canal utile, des données utiles orientées paquets étant transmises entre les points terminaux de communication (12, 14) par l'intermédiaire de la connexion de canal utile et
- les données utiles étant affectées à au moins une connexion de communication, notamment une connexion vocale,
comprenant un routeur (24) qui comprend une unité de contrôle et une unité de commande (20, 22)
- l'unité de contrôle (20) étant raccordée à l'unité de commande (22) par l'intermédiaire d'une ligne de signalisation (26),
- l'unité de contrôle (20) contrôlant la connexion de signalisation sur demandes d'au moins une autre connexion de communication et, lors d'une demande d'une unité de commande (22), signalant d'affecter à la connexion (10) un ou plusieurs canaux de transmission libres supplémentaires pour l'au moins une connexion de communication demandée, lors d'une demande signalée (S1)
- il est vérifié si la bande passante suffit pour la connexion de communication demandée (A1),
- si ce n'est pas le cas, il est déterminé si, pour le besoin en bande passante de la connexion de communication demandée, un nombre correspondant de canaux de transmission (18) sont libres (A2),
- la demande de connexion est mémorisée dans une file d'attente (S2),
- des canaux de transmission (18) libres sont établis (S3),
- la demande de connexion mémorisée est traitée (S4) et
- les canaux de transmission établis (18) sont affectés à la connexion de canal utile (S6).

8. Dispositif selon la revendication 7,
**caractérisé en ce que**
le routeur (24) présente une unité de mesure (28) pour mesurer le débit de données des canaux de transmission (16, 18) d'une connexion (10).

9. Dispositif selon la revendication 7 ou 8,
**caractérisé en ce que**
les points terminaux de communication (12, 14) sont des installations de télécommunication, des terminaux ISDN et/ou des ordinateurs personnels avec des branchements au réseau de données.

10. Dispositif selon l'une quelconque des revendications 7 à 9,
**caractérisé en ce que**
le routeur (24) fait partie d'une installation de télécommunication (30).

11. Dispositif selon la revendication 10,
**caractérisé en ce que**
l'installation de télécommunication (30) présente un branchement LAN pour le raccordement à des ordinateurs personnels (32), à des téléphones IP avec branchement LAN (34) et/ou à d'autres installations de télécommunication (36) par l'intermédiaire d'un LAN (38).

12. Dispositif selon la revendication 10 ou 11,
**caractérisé en ce que**
l'installation de télécommunication est une installation de télécommunication ISDN (30) avec branchement de base ou branchement à débit primaire (31).
